Europäisches Patentamt

European Patent Office

Office européen des brevets

(11) Veröffentlichungsnummer : **0 187 210**
**B1**

(12) EUROPÄISCHE PATENTSCHRIFT

(45) Veröffentlichungstag der Patentschrift :
09.09.87

(51) Int. Cl.⁴ : **B 65 G 69/28**

(21) Anmeldenummer : 85113364.5

(22) Anmeldetag : 22.10.85

(54) Überladebrücke für Rampen.

(30) Priorität : 30.10.84 DE 3439651

(43) Veröffentlichungstag der Anmeldung :
16.07.86 Patentblatt 86/29

(45) Bekanntmachung des Hinweises auf die Patenterteilung : 09.09.87 Patentblatt 87/37

(84) Benannte Vertragsstaaten :
AT BE CH DE FR GB IT LI LU NL SE

(56) Entgegenhaltungen :
DE-B- 1 249 768

(73) Patentinhaber : Alten, Kurt
Ringstrasse 14
D-3015 Wennigsen (DE)

(72) Erfinder : Alten, Kurt
Ringstrasse 14
D-3015 Wennigsen (DE)

(74) Vertreter : Depmeyer, Lothar
Auf der Höchte 30
D-3008 Garbsen 1 (DE)

**Beschreibung**

Die Erfindung betrifft eine Überladebrücke für Rampen mit einer rampenseitig angelenkten Brückenplatte, die an ihrem freien Ende mit einer zur Auflage auf der zu be- bzw. entladenden Plattform dienenden, ein- und ausfahrbaren Verlängerung versehen ist, und ferner mit einer Halterung für Brückenplatte in der Ruhelage (bekannt aus DE-B-1 249 768).

Die bekannten Halterungen, die die in der Ruhestellung befindliche Brücke gegen Einstürzen sichern sollen, bestehen aus Stützen, die die Brückenplatte im Bereich ihres freien Endes unterfangen. Diese Halterungen befinden sich somit unterhalb der Brückenplatte und erfordern daher nicht nur einen vergleichsweise grossen Platzbedarf, vielmehr müssen sie auch klappbar oder versenkbar sein, damit sie ein Eintauchen der Brückenplatte in die darunter befindliche Rampenausnehmung zulassen.

Der Erfindung liegt im wesentlichen die Aufgabe zugrunde, die obigen Brücken so auszubilden, dass die erwähnten Halterungen von den unterhalb der Brückenplatte befindlichen Räumlichkeiten unabhängig sind und darüber hinaus bei grosser Betriebssicherheit wirksam werden können.

Zur Lösung dieser Aufgabe ist erfindungsgemäss an der Brückenplatte — vorzugsweise beidseitig — ein sich quer hierzu erstreckender, zum Eingriff in die Rampe ausgebildeter, längsverschiebbarer Bolzen gelagert, der unter der Wirkung einer Rückstellkraft durch die rückläufige Verlängerung seitlich nach aussen in die Wirkstellung abgedrängt werden kann. Dieses Abdrängen erfolgt vorzugsweise durch schräge Auflaufflächen ; zudem ist der Bolzen vorzugsweise auch an der Verlängerung gelagert, während ein zum Auflaufen geeignetes Widerlager an der Brückenplatte bzw. einem hieran befindlichen Querträger befestigt ist.

Die Anordnung eines solchen Bolzens an der Brückenplatte hat den grossen Vorteil, dass er seitlich nach aussen verschoben werden kann und so in die Rampe einzudringen vermag, wodurch die gewünschte Sicherung der Brücke gewährleistet wird. Ein zusätzlicher Platzbedarf nach unten hin ist nicht erforderlich. Darüber hinaus nutzt die Erfindung die Bewegung der Verlängerung aus, um die Halterung in ihre Wirklage zu bringen, ausgehend von der Erkenntnis, dass die Halterung wirksam sein soll, wenn die Verlängerung eingefahren ist bzw. sich in der Ruhestellung befindet.

Weitere Einzelheiten der Erfindung werden anhand der Zeichnung erläutert, in der ein Ausführungsbeispiel der Erfindung dargestellt ist.

Es zeigen :

Figur 1 eine Draufsicht auf eine in der Betriebsstellung befindliche Überladebrücke für Rampen,

Figur 2 ist eine Teilstirnansicht der Brücke nach Fig. 1 in Richtung des Pfeiles II gesehen,

Figur 3 ist ein Teilschnitt nach der Linie III-III von Fig. 1 und

Figur 4 ist ein Schnitt nach der Linie IV-IV von Fig. 3.

Die Brückenplatte 1 ist an ihrem hinteren Ende um eine waagerechte Achse 2 an der Rampe 3 gelagert ; sie befindet sich in einer Ausnehmung 4 der Rampe, schliesst im Ruhezustand oben mit der Rampenoberfläche ab und kann nach oben oder unten — in die Ausnehmung 4 hinein — verschwenkt werden. Am freien Ende der Brückenplatte 1 befindet sich eine ein- und ausfahrbare Verlängerung 5, die in der Betriebsstellung der Brücke auf der Plattform 6 eines LKW od. dgl. aufliegt in der Weise, dass die Brücke evtl. Höhenänderungen der Plattform 6 folgen kann.

Die Brückenplatte 1 hat oben eine durchgehende Stahlplatte 7, die seitlich durch Bleche 7' abgeschlossen ist. Im übrigen können noch unterhalb der Stahlplatte 7 Längs- und Querträger angeordnet sein. So ist auch im Bereich des freien Brückenendes ein Querträger 8 vorgesehen. Zwischen diesem Querträger 8 und der Stahlplatte 7 befinden sich kammartig nach hinten ersteckende Stäbe 9 der Verlängerung 5, deren vorderes, winkelförmiges Ende ein Winkeleisen 10 als Querträger aufweist, von dem aus sich auch der lange Schenkel 11 der Verlängerung 5 nach vorne erstreckt.

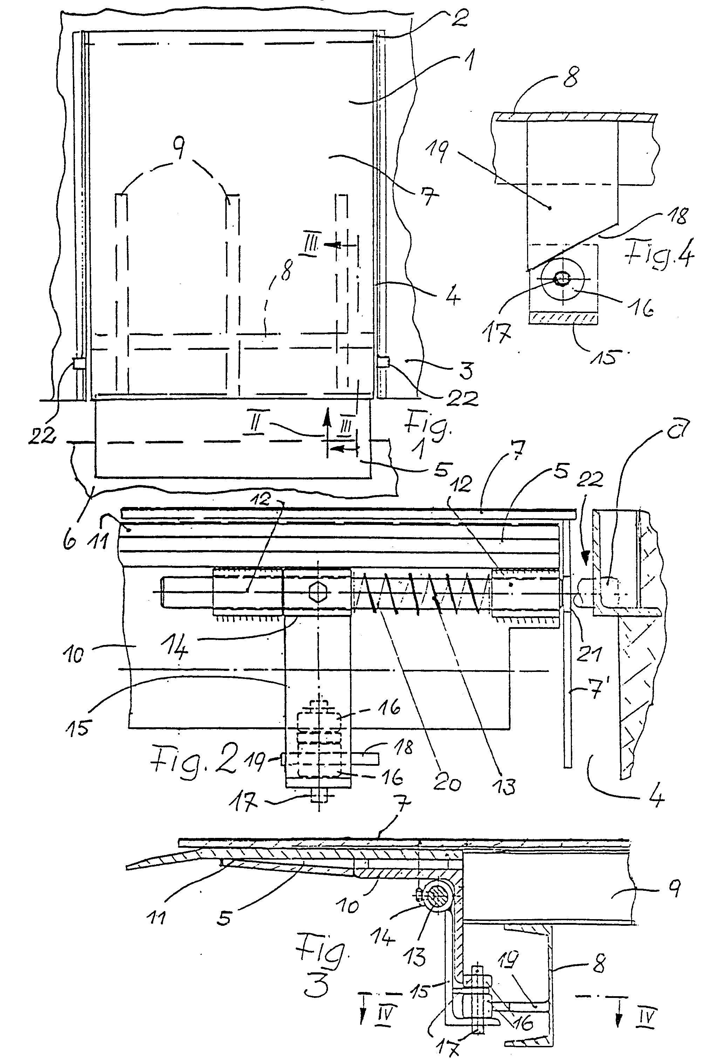

Die meist hydraulischen Antriebe der Brücke sind nicht dargestellt. So kann der Verlängerung 5 ein Arbeitszylinder zugeordnet sein, der die Verlängerung 5 ausfahren kann (Stellung gemäss Fig. 1), aber auch einzieht (Stellung gemäss Fig. 3). Der Brückenplatte 1 ist noch ein Hubzylinder zugeordnet.

Im Scheitelbereich des Winkeleisens 10 befinden sich zwei Augen 12 zur verschiebbaren Lagerung eines Bolzens 13, der sich quer zur Brücke bzw. parallel zum Winkeleisen 10 erstreckt. Eine auf dem Bolzen 13 befestigte Buchse 14 dient zur Befestigung eines Winkelstückes 15, das sich nach unten erstreckt und zur Lagerung von zwei Rollen 16 mit senkrechter Achse 17 dient. Die obere Rolle 16 liegt dabei an der Rückseite des Winkeleisens 10 an, während die obere Rolle 16 auf eine Schrägfläche 18 eines Widerlagers 19 auflaufen kann, das mit dem Querträger 8 verbunden ist. Dieses Auflaufen geschieht, wenn die Verlängerung 5 dabei ist, ihre Ruhestellung zu erreichen. Dabei wird auf den Bolzen 13 eine Längskraft ausgeübt, um ihn so gegen die Kraft der ihn umschliessenden Druckfeder 20 durch die Bohrung 21 der seitlichen Bleche 7' hindurchzuführen. In der Endstellung des Bolzens 13 befindet sich sein freies Ende (bei a dargestellt) in einer kleinen Aussparung 22 der Seitenbegrenzung für die Ausnehmung 4. Damit ist die Brücke gegen Absinken, jedoch zugleich gegen ungewolltes Bewegen der Verlängerung 5 gesichert. Demgemäss kann die Brückenplatte 1 im Rampenverkehr überfahren werden, ohne Senkbewegungen der Brückenplatte befürchten zu müssen.

Es versteht sich, dass die Bolzenanordnung gemäss Fig. 2 spiegelbildartig auf der gegenüberliegenden Brückenseite angeordnet sein kann, damit eine noch grössere Sicherheit erreichbar ist.

Wird die Verlängerung 5 ausgefahren, so wird der Bolzen 13, mit dem Freikommen von der Schrägfläche 18 durch die Druckfeder 20 wieder in die Ruhelage zurückgeführt, wobei er wieder eingezogen ist, das Blech 7' also seitlich nicht mehr überragt.

Wichtig ist, dass die oben gelegene Rolle 16 durch ihre Anlage an der Rückseite des Winkeleisens 10 ein Verdrehen des Bolzens 13 verhindert. Somit kann ein Auflaufen auf die Schrägfläche 18 nur zu einer Längsverschiebung des Bolzens 13 führen. Vorteilhaft ist ausserdem, dass die wichtigsten Teile für die Halterung (Bolzen 13 mit Lagerung ; Widerlager 19) an steifen Trägern der Brücke befestigt sind.

## Patentansprüche

1. Überladebrücke für Rampen mit einer an ihrem hinteren, der Rampe (3) zugekehrten Ende verschwenkbar gelagerten Brückenplatte (1), die an ihrem freien Ende mit einer ein- und ausfahrbaren Verlängerung (5) zur Auflage auf der zu be- bzw. entladenden Plattform (6) versehen ist, und ferner mit einer Halterung für die Brückenplatte in der Ruhelage, dadurch gekennzeichnet, dass an der Brückenplatte (1) — vorzugsweise beidseitig — ein sich quer hierzu erstreckender, zum Eingriff in die Rampe (3) ausgebildeter Bolzen (13) längsverschiebbar gelagert ist, der gegen die Wirkung einer Rückstellkraft (Druckfeder 20) durch die sich zurückbewegende Verlängerung (5) seitlich nach aussen in die Wirkstellung abdrängbar ist.

2. Brücke nach Anspruch 1, dadurch gekennzeichnet, dass der Bolzen (13) an der Verlängerung (5) und das zum Abdrängen dienende Widerlager (19) an der Brückenplatte (1) gelagert sind.

3. Brücke nach Anspruch 1, dadurch gekennzeichnet, dass das Abdrängen durch Auflaufen auf eine Schrägfläche erfolgt.

4. Brücke nach Anspruch 1, dadurch gekennzeichnet, dass die feststehenden und die beweglichen Teile (13 ; 19) der Halterung an Querträgern (8, 10) der Brückenplatte (1) und der Verlängerung (5) befestigt sind.

5. Brücke nach Anspruch 1, dadurch gekennzeichnet, dass der Bolzen (13) mit einem Arm (Winkelstück 15) versehen ist, der mit Rollen (16) zum Auflaufen auf ein Widerlager (19) und/oder zur Anlage an einem festen Anschlag zur Vermeidung einer Bolzenverdrehung ausgestattet ist.

6. Brücke nach Anspruch 1, dadurch gekennzeichnet, dass der Bolzen (13) gegen die Wirkung einer ihn umschliessenden Druckfeder (20) verschiebbar ist.

7. Brücke nach Anspruch 1, dadurch gekennzeichnet, dass der Bolzen (13) in seiner Betriebsstellung in eine vorzugsweise oben offene Aussparung (22) der Seitenbegrenzung der die Brückenplatte (1) aufnehmenden Ausnehmung (4) der Rampe (3) eingreift in der Weise, dass die Brückenplatte gegen Absinken und die Verlängerung (5) gegen Verschieben in Längsrichtung der Brücke gesichert sind.

## Claims

1. Ramp bridging device comprising a bridge plate (1) which is pivotally mounted at its rear end facing the ramp (3) and is provided, at its free end, with a retractable and extensible extension portion (5) for support on the platform (6) to be loaded or unloaded, and also comprising a support member for the bridge plate in the rest position, characterised in that a pin (13), which extends at right angles to the bridge plate (1) and is adapted to engage in the ramp (3), is mounted in a longitudinally displaceable manner on the bridge plate — preferably on both sides — and is deflectable laterally outwardly into the operative position in opposition to the action of a restoring force (compression spring 20) by means of the retracting extension portion (5).

2. Bridging device according to claim 1, characterised in that the pin (13) is mounted on the extension portion (5), and the abutment member (19), which is used for deflection purposes, is mounted on the bridge plate (1).

3. Bridging device according to claim 1, characterised in that the deflection is effected by encountering an inclined surface.

4. Bridging device according to claim 1, characterised in that the stationary and displaceable parts (13 ; 19) of the support member are secured to transverse crosspiece members (8, 10) of the bridge plate (1) and of the extension portion (5).

5. Bridging device according to claim 1, characterised in that the pin (13) is provided with an arm (angle member 15) which is fitted with rollers (16) for encountering an abutment member (19) and/or for abutment with a fixed stop to prevent rotation of the pin.

6. Bridging device according to claim 1, characterised in that the pin (13) is displaceable in opposition to the action of a compression spring (20) surrounding it.

7. Bridging device according to claim 1, characterised in that, in its operative position, the pin (13) engages in a recess (22), which is preferably open at its upper end and is formed in the lateral boundary of the opening (4) in the ramp (3) accommodating the bridge plate (1), in such a manner that the bridge plate is prevented from lowering and the extension portion (5) is prevented from being displaced in the longitudinal direction of the bridging device.

## Revendications

1. Passerelle de transbordement pour des rampes comprenant un plateau (1), qui est monté pivotant par l'extrémité arrière tournée vers la rampe (3), et qui est muni à son extrémité libre d'un prolongement (5) pouvant être déployé ou escamoté et qui est destiné à venir en appui sur la plate-forme (6) à charger ou à décharger, et en outre un dispositif de maintien du plateau (1) en la position de repos, caractérisée en ce que sur le plateau (1), de préférence des deux côtés de celui-ci, est monté coulissant longitudinalement un axe (13) qui s'étend transversalement au plateau (1), qui est constitué de manière à pénétrer dans la rampe (3) et qui peut être écarté latéralement vers l'extérieur en la position active par le prolongement (5) dans son mouvement de retour à l'encontre de l'action d'une force de rappel (ressort de compression 20).

2. Passerelle suivant la revendication 1, caractérisé en ce que l'axe (13) est monté sur le prolongement (15) et la butée (19) servant à l'écartement est montée sur le plateau (1).

3. Passerelle suivant la revendication 1, caractérisée en ce que l'écartement s'effectue par une course sur une surface inclinée.

4. Passerelle suivant la revendication 1, caractérisée en ce que les parties fixes et les parties mobiles (13 ; 19) du dispositif de maintien sont fixées sur des traverses (8, 10) du plateau (1) et du prolongement (5).

5. Passerelle suivant la revendication 1, caractérisée en ce que l'axe (13) est muni d'un bras (pièce coudée 15) qui est muni de galets (16) pour rouler sur une butée (19) et/ou pour venir en contact avec une butée fixe, en vue d'empêcher toute rotation de l'axe.

6. Passerelle suivant la revendication 1, caractérisée en ce que l'axe (13) peut coulisser à l'encontre de l'action d'un ressort de compression (20) qui l'entoure.

7. Passerelle suivant la revendication 1, caractérisée en ce que l'axe (13) pénètre, en sa position de fonctionnement, dans une cavité (22) de préférence ouverte vers le haut de la délimitation latérale de l'évidement (40) pour la réception du plateau (1) qui est ménagé dans la rampe, de manière à empêcher tout abaissement du plateau et tout coulissement du prolongement (5) dans la direction longitudinale de la passerelle.

Fig. 1

Fig. 2

Fig. 3

Fig. 4